Europäisches Patentamt

European Patent Office

Office européen des brevets

(19)

(11) Veröffentlichungsnummer: **0 255 076**
**B1**

# (12) EUROPÄISCHE PATENTSCHRIFT

(45) Veröffentlichungstag der Patentschrift:
**31.01.90**

(21) Anmeldenummer: **87110825.4**

(22) Anmeldetag: **25.07.87**

(51) Int. Cl.⁴: **F16P 3/08**, B23Q 11/08,
E05F 15/08

(54) Öffnungseinrichtung für sich überlappende, an parallelen Führungsbahnen von Werkzeugmaschinenkabinen geführte Schiebetore.

(30) Priorität: **29.07.86 DE 3625544**

(43) Veröffentlichungstag der Anmeldung:
**03.02.88 Patentblatt 88/5**

(45) Bekanntmachung des Hinweises auf die Patenterteilung:
**31.01.90 Patentblatt 90/5**

(84) Benannte Vertragsstaaten:
**BE DE ES FR GB IT NL**

(56) Entgegenhaltungen:
**FR-A- 2 520 426**
**US-A- 3 871 437**

(73) Patentinhaber: **Firma HCR-Heinrich Cremer GmbH,
Oppelner Strasse 37, D-4050 Mönchengladbach 3(DE)**

(72) Erfinder: **Cremer, Heinrich, Eisvogelweg 22,
D-4050 Mönchengladbach 4(DE)**
Erfinder: **Cremer, Klaus, Königstrasse 35,
D-4050 Mönchengladbach 2(DE)**

(74) Vertreter: **Wangemann, Horst, Dipl.-Ing.,
Stresemannstrasse 28, D-4000 Düsseldorf 1(DE)**

## Beschreibung

Die Erfindung betrifft eine Öffnungseinrichtung für sich überlappende, an parallelen Führungsbahnen von Werkzeugmaschinen geführte Schiebetore, mit seitlich der Tore paarweise angeordneten Zylindern mit Kolbenstangen.

Derartige Öffnungseinrichtungen sind für die Schiebetore von Werkzeugmaschinenkabinen bekannt. Die hierbei zur Anwendung gelangenden Einrichtungen weisen teleskopartige Hubzylinder auf. –

Die US-A 3 871 437 offenbart eine Öffnungseinrichtung für an parallelen Führungsbahnen von Werkzeugmaschinen geführte Gatter.

Hierbei findet beidseitig der Öffnung je ein Hubzylinder Anwendung, der die einzelnen Gatter einzeln nacheinander verstellt, ähnlich den abgestuften, teleskopartig ineinander angeordneten Kolbenstangen eines Hubzylinders.

Auch bei dieser Einrichtung ergibt sich eine Öffnungszeit, die der Bewegung des Kopfes der Kolbenstange über deren gesamten Weg entspricht. – Die bekannten Hubeinrichtungen sind entweder konstruktiv aufwendig und daher teuer, oder aber sie benötigen, wie ausgeführt, einen Zeitaufwand, der für ein schnelles Öffnen und Schließen der Schiebetore ungeeignet ist.

Die Aufgabe der Erfindung besteht daher darin, eine Öffnungseinrichtung der eingangs genannten Art mit konstruktiv einfachen Mitteln zu schaffen, die ein schnelles Öffnen und Schließen der Schiebetore erlaubt und nur einen geringen Platz in Anspruch nimmt und leicht zu warten ist.

Zur Lösung dieser Aufgabe sieht die Erfindung die Merkmale des kennzeichnenden Teils des Hauptanspruches vor, die Merkmale der Unteransprüche dienen der Verbesserung und Weiterentwicklung der Einrichtung nach dem Hauptanspruch. -

Die Erfindung geht von dem Gedanken aus, den oder die ortsfesten Zylinder dazu zu benutzen, nicht nur das eine zugeordnete Schiebetor zu bewegen, sondern auch mit ihm den oder die weiteren Zylinder zu bewegen, so daß der eine oder zwei Zylinder auf gleicher Höhe eine Relativgeschwindigkeit gegenüber dem anderen Schiebetor erhält. Bei gleichlangen Zylindern und gleicher Bewegungsgeschwindigkeit der Kolbenstangen der Zylinder ist die Bewegungsgeschwindigkeit des einen Schiebetores doppelt so groß wie die des anderen Schiebetores. Bei gleichzeitiger Betätigung des unteren und des oberen Zylinderkolbenpaares gelangen damit die Schiebetore gleichzeitig in ihre obere und untere Endstellung.

Von besonderem Vorteil ist es, daß die Zylinder wahlweise im Inneren der Werkzeugmaschinenkabine oder außerhalb der Kabine Platz finden können.

Auf der Zeichnung sind Ausführungsbeispiele der erfindungsgemäßen Öffnungseinrichtung dargestellt und zwar zeigt.

Fig. 1 eine Vorderansicht der Einrichtung mit den beiden Schiebetoren,

Fig. 2 die Ausgangsstellung der Schiebetore und der Kolbenstangen der beiden Zylinder zu jeder Seite der Schiebetoranordnung, Fig. 3 die obere Endstellung der beiden Schiebetore sowie des oberen Zylinders,

Fig. 4 den Angriff eines unteren stationären Zylinders an dem oberen Schiebetor,

Fig. 5 eine weitere Ausführungsform der Anordnung dieses Zylinders und des Angriffes an dem genannten Schiebetor,

Fig. 6 die Anwendung nur eines Hubzylinders an einem Tor,

Fig. 7 eine weitere Ausführungsmöglichkeit mit in ihrer Stellung auf gleicher seitlicher Höhe gelegenen Hubzylindern zweier Schiebetore,

Fig. 8 die Anwendung des der Erfindung zugrunde liegenden Prinzips bei drei Schiebetoren und

Fig. 9 die Anordnung der Hubzylinder zweier Schiebetore außerhalb der Werkzeugmaschinenkabine.

Die beiden Schiebetore 1, 2 verschließen in ihrer Ausgangslage die Öffnung 3 einer Werkzeugmaschinenkabine 4, wobei die beiden Schiebetore an entsprechenden Führungen beidseits der Öffnung in vertikaler Richtung geführt sind.

Beidseits des unteren Schiebetores 1 und des entsprechenden Öffnungsabschnittes in der vorderen Wand der Kabine 4 ist jeweils ein senkrechter Hubzylinder 8 angeordnet, dessen Kolbenstange 9 am oberen Ende aus dem Zylinder ragt und dort mittels einer Traverse oder Stegs 10 mit dem unteren Rand 2a des oberen Schiebetores 2 verbunden ist. An der Innenseite des Schiebetores 2 in Nähe von dessen Führungskanten 2b und auf Höhe des Tores ist je ein Zylinder 11 befestigt, wobei das obere und untere Ende des Zylinders mit dem unteren Torrand 2a und dem oberen Torrand 2c fest verbunden ist.

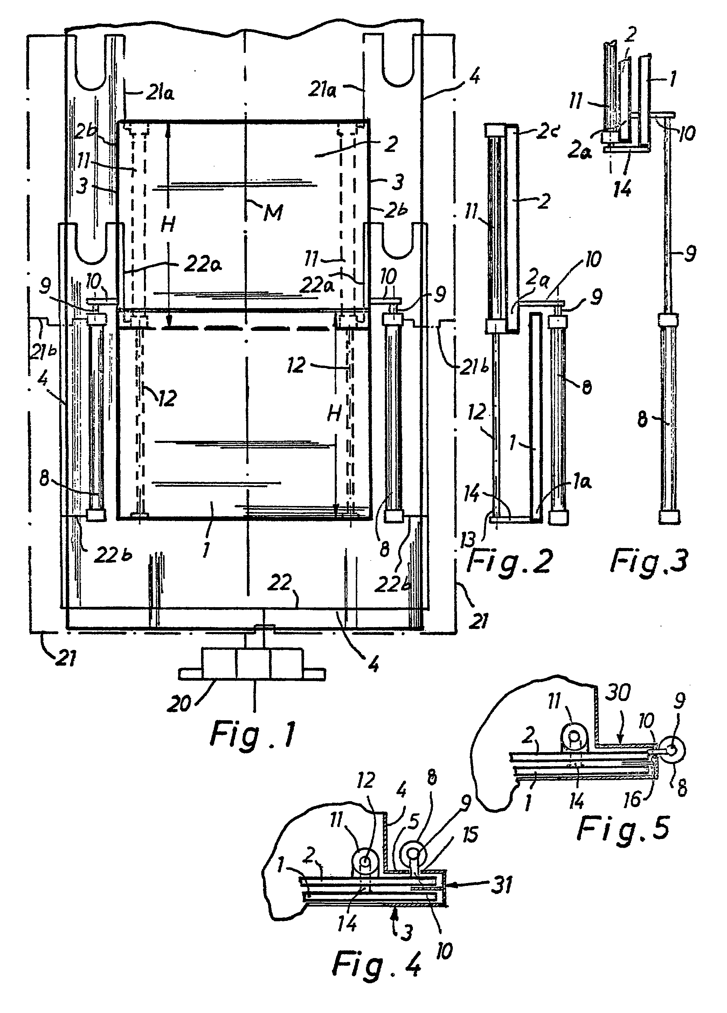

Die Kolbenstange 12 des Kolbens 11 ist nach unten gerichtet und mit ihrem Ende 13 über eine Traverse oder einen Steg 14 mit dem unteren Ende 1a des unteren Schiebetores 1 verbunden. Wie aus Figur 1 zu erkennen ist, ist die Anordnung der Zylinder und der Verbindung von deren Kolbenstange mit den Schiebetoren bzw. der Kabine spiegelbildlich zur Mittelebene M der Kabine bzw. der Vorderwand derselben vorgesehen. - Dem Schiebetor 1 sind beidseits die Zylinder 8 zugeordnet, d. h. diese befinden sich auf gleicher Höhe; dem Schiebetor 2 sind die Zylinder 11 in entsprechender Weise zugeordnet.

Aus Figur 3 ist die Wirkungsweise der Vorrichtung erkennbar. Beim Ausfahren der Kolbenstange 9 aus dem Zylinder 8 hat der Zylinder 11 und das mit ihm verbundene obere Tor 2 die Geschwindigkeit V. Die Kolbenstange 12 des Zylinders 11 verleiht dem unteren Schiebetor 1 zusätzlich zu dieser Geschwindigkeit V eine weitere Geschwindigkeit V, so daß sich das untere Tor 1 mit doppelter Geschwindigkeit wie das Tor 2 hebt und beide Tore aus der Stellung nach Figur 2 gleichzeitig in die Stellung nach Figur 3 gelangen, da die Schiebetore gleiche oder ungefähr gleiche Höhe H besitzen und die Zylinder 8, 11 gleiche oder annähernd gleiche Hubhöhe haben; auch der Wirkungsquerschnitt beider Zylinder kann gleich sein. Während die unteren Zylinder 8 das obere Tor 2 aufwärts drücken, ziehen die Zylinder 11 das untere Tor 1 in die Stellung nach Figur 3.

Figur 4 zeigt den Angriff der Kolbenstange 9 an dem oberen Tor 2. Hierzu weist die Wand 5 für das obere Tor 2 einen Längsschlitz 15 auf, durch den der an dem oberen Tor angreifende Steg 10 der Kolbenstange 9 hindurchragen kann. - Figur 5 zeigt den Durchtritt des Steges 10 durch die stirnseitige Wand 16 der Kabine.

Das jeweils untere Ende der Zylinder 8, 11 ist mit einer Leitung 22 über Abzweige 22a, 22b mit einem Drei-Wege-Ventil 20 verbunden, während das obere Ende mit einer Leitung 21 über Abzweige 21a, 21b mit diesem Ventil verbunden ist.

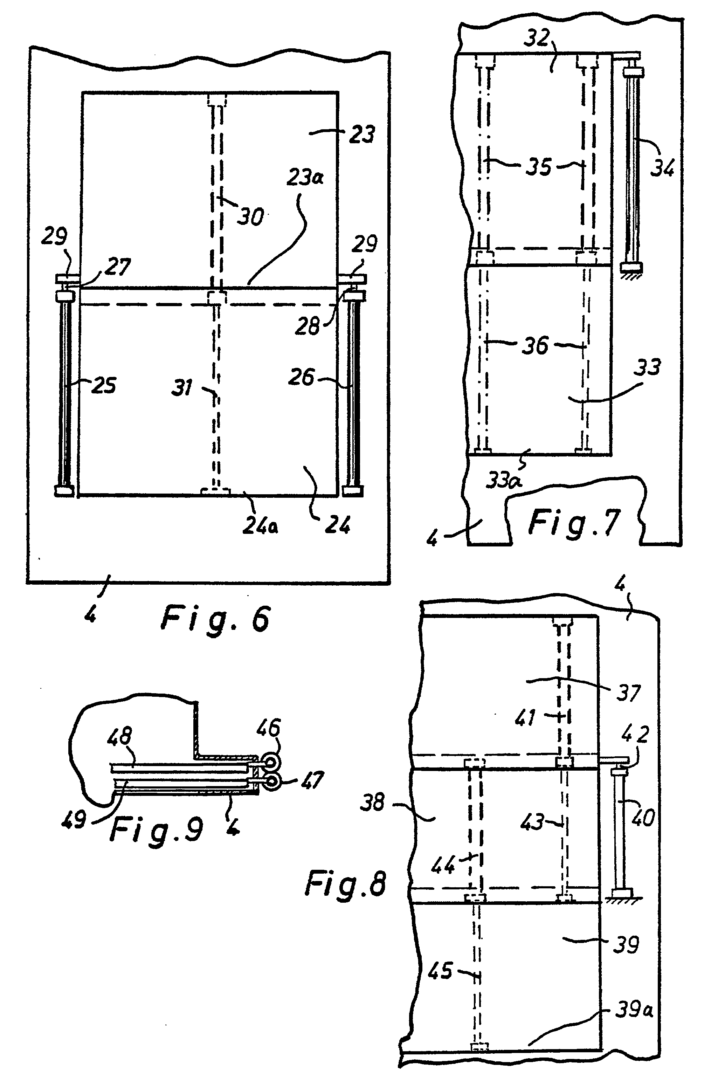

Bei der in Fig. 6 dargestellten Ausführungsform der Öffnungseinrichtung für zwei Schiebetore 23, 24 sind wiederum zwei seitlich des unteren Tores 24 angeordnete Hubzylinder 25, 26 vorgesehen, deren Kolbenstange 27, 28 mit dem unteren Abschnitt 23a des oberen Schiebetores 23 über den Steg 29 verbunden ist. Mit dem oberen Schiebetor 23 ist in der Art wie die Zylinder 11 der Ausführung nach Fig. 1 mit dem oberen Tor 2 wirken und verbunden sind, nunmehr ein mittiger Zylinder 30 angeordnet, dessen Kolbenstange 31 am unteren Abschnitt 24a des Tores 24 angreift. Dem unteren Tor 24 ist das Zylinderpaar 25, 26; dem oberen Tor 23 der mittige Zylinder 30 zugeordnet. Auch hier drücken die Zylinder 25, 26 das obere Tor 23 aufwärts, der Zylinder 30 zieht das untere Tor 24 nach oben.

Fig. 7 veranschaulicht zwei Schiebetore 32, 33, von denen das obere Schiebetor 32 mit Hilfe ortsfester Hubzylinder 34 gehoben und gesenkt wird und mit Zylindern 35 fest versehen ist, deren Kolbenstangen 36 am unteren Abschnitt 33a des unteren Schiebetores 33 angreifen. - Hier ist dem Tor 32 das Zylinderpaar 34, dem Tor 33 das Zylinderpaar 35 zugeordnet. Die Zylinder 34 drücken, die Zylinder 35 ziehen ihre Tore 32, 33 in deren Endstellung.

Daß das erfindungsgemäße Prinzip auch bei mehr als zwei Schiebetoren anzuwenden möglich ist, zeigt Fig. 8, wo die drei Schiebetore 37, 38, 39 zu öffnen und zu schließen sind. Hierbei sind die Tore 37, 38 und deren Zylinder 40, 41 mit ihren Kolbenstangen 42, 43 wie die Teile 1, 2 und 11, 12 nach Fig. 1 angeordnet. And dem mittleren Tor 38 ist nun der dritte Zylinder 44 befestigt, dessen Kolbenstange 45 am unteren Abschnitt 39a des unteren Tores 39 angreift.

Während in den Fig. 4 und 5 jeweils einer der beiden Zylinder 8, 11 außen und der andere Zylinder innerhalb der Werkzeugmaschinenkabine angeordnet ist, sind in Fig. 9 beide Zylinder 46, 47 der Tore 48, 49 außerhalb der Kabine 4 vorgesehen. – Für die Anordnung der Zylinder kann jede Kombination der Anordnung gewählt werden, wie auch die Platzierung der Zylinder und deren Verbindung mit den Schiebetoren variiert werden kann.

Was hier vorstehend an übereinander angeordneten Toren beschrieben ist, kann ebenso bei nebeneinander angeordneten Toren Anwendung finden. Insofern soll sich der Schutz unter Änderung der Begriffe "übereinander" und "seitlich" in "nebeneinander" und "über und unter" auch auf nebeneinander angeordnete Tore erstrecken.

Ohne Änderung des Schutzumfanges gilt es als äquivalent, wenn z. B. der Zylinder 8 auf Höhe des Tores 2 in dessen Ausgangsstellung (Fig. 2) angeordnet wird und die Kolbenstange 9 am oberen Ende des Tores 2 angreift. Es wird hierdurch die gleiche Funktion und Arbeitsweise erreicht wie sie vorstehend geschildert ist.

**Patentansprüche**

1. Öffnungseinrichtung für sich überlappende, an parallelen Führungsbahnen von Werkzeugmaschinenkabinen geführte Schiebetore, mit seitlich der Tore paarweise oder mittig angeordneten hydraulischen oder pneumatischen Zylindern mit Kolbenstangen, dadurch gekennzeichnet, daß jedem der Tore (1, 2, 23, 24, 32, 33, 37, 38, 39) beidseitig oder in Längsmitte (M) der Kabinenöffnung (3) ein oder zwei Zylinder (8, 11; 25, 26; 30; 34, 35; 40, 41, 44) zugeordnet ist bzw. sind, der oder die Zylinder des einen Tores dieses aufwärts drückt bzw. drücken, der oder die Zylinder des anderen Tores dieses aufwärts zieht bzw. ziehen und die Tore in ihrer Endstellung neben- bzw. hintereinander auf gleicher Höhe liegen, wobei ein Teil der Zylinder (8, 25, 26, 34, 46) ortsfest angeordnet, ein anderer Teil der Zylinder (11, 30, 35, 41,44) fest mit einem der Schiebetore verbunden ist.

2. Öffnungseinrichtung nach Anspruch 1, dadurch gekennzeichnet, daß die Kolbenstange oder -stangen (12, 31, 36, 43, 45) der mit einem Schiebetor (2, 23, 32, 37, 38) verbunden Zylinder (11, 30, 35, 41, 44) mit ihrem freien Ende mit dem unteren Rand (24a, 33a, 39a) des benachbarten Schiebetores (1, 24, 33, 38, 39) verbunden ist.

3. Öffnungseinrichtung nach Anspruch 1, bei der die Tore (1, 2) gleich oder annähernd gleiche Höhe haben, dadurch gekennzeichnet, daß die Zylinder gleiche oder annähernd gleiche Länge besitzen.

. 4. Öffnungseinrichtung nach Anspruch 1 und 3 dadurch gekennzeichnet, daß Zylinder außerhalb der Werkzeugmaschinenkabine, andere Zylinder im Inneren der Kabine oder alle Zylinder außerhalb der Kabine angeordnet sind.

5. Öffnungseinrichtung nach Anspruch 1 und einem der Ansprüche 2 und 4, dadurch gekennzeichnet, daß das obere Zylinderpaar (11) an seinem oberen und unteren Ende mit dem oberen und unteren Rand (2a, 2c) des oberen Tores (2) verbunden ist. Öffnungseinrichtung nach Anspruch 1 und einem der Ansprüche 2 bis 5, dadurch gekennzeichnet, daß jeder Zylinder beidendig mit Druckmittel beaufschlagbar ist.

7. Öffnungseinrichtung nach Anspruch 1 und einem der Ansprüche 2 bis 6, dadurch gekennzeichnet, daß die ortsfesten Zylinder mittels Traversen oder Stege (10, 14, 29) mit dem auf gleicher Höhe gelegenen Tor verbunden sind.

**Claims**

1. Opening device for overlapping sliding doors which are guided on parallel guide tracks of machine tool cabins, having hydraulic or pneumatic cylinders with piston rods, which cylinders are arranged in pairs laterally with respect to the doors or in the centre, characterised in that there is or are coordinated with each fo the doors (1, 2, 23, 24, 32, 33, 37, 38, 39) on both sides or in the longitudinal centre (M) of the cabin opening (3) one or two cylinders (8, 11; 25, 26; 30; 34, 35; 40, 41, 44), the cylinder or cylinders of the one door presses or press the latter upwards, the cylinder or cylinders of the other door draws or draw the latter upwards and the doors in their final position lie side by side or one after the other at the same height, one part of the cylinders (8, 25, 26, 34, 46) being arranged in a fixed manner and another part of the cylinders (11, 30, 35, 41, 44) being fixedly connected with one of the sliding doors.

2. Opening device according to claim 1, characterised in that the free end or ends of the piston rod or rods (12, 31, 36, 43, 45) of the cylinders (11, 30, 35, 41, 44), which are connected with a sliding door (2, 23, 32, 37, 38), is or are connected with the lower edge (24a, 33a, 39a) of the adjacent sliding door (1, 24, 33, 38, 39).

3. Opening device according to claim 1, in which the doors (1, 2) have the same or substantially the same height, characterised in that the cylinders have the same or substantially the same length.

4. Opening device according to claim 1 and 3, characterised in that cylinders are arranged outside the machine tool cabin, other cylinders are arranged inside the cabin or all the cylinders are arranged outside the cabin.

5. Opening device according to claim 1 and one of the claims 2 and 4, characterised in that the upper cylinder pair (11) is connected at its upper and lower end with the upper and lower edge (2a, 2c) of the upper door (2).

6. Opening device according to claim 1 and one of the claims 2 to 5, characterised in that pressure means can act on each cylinder at both ends.

7. Opening device according to claim 1 and one of the claims 2 to 6, characterised in that the fixed cylinders are connected with the door, which is placed at the same height, by means of cross-members or bars (10, 14, 29).

## Revendications

1. Dispositif d'ouverture pour des portes coulissantes qui se chevauchent et sont guidées par des glissières parallèles sur des cabines de machines-outils, comportant des cylindres pneumatiques ou hydrauliques à tiges de piston disposés par paires sur le côté des portes ou au centre des portes, caractérisé en ce que chacune des portes (1, 2, 23, 24, 32, 33, 37, 38, 39) est déplacée par un ou deux cylindres (8, 11; 25, 26; 30; 34, 35; 40, 41, 44) prévu(s) de chaque côté ou au centre (M) de l'ouverture (3) de la cabine (4), le ou les cylindres d'une des portes pousse(nt) celle-ci vers le haut, le ou les cylindres de l'autre porte tire(nt) celle-ci vers le haut et en ce que les portes se trouvent à la même hauteur l'une à côté de l'autre ou l'une derrière l'autre dans leur position finale, un des cylindres (8, 25, 26, 34, 46) étant stationnaire et l'autre cylindre (11, 30, 35, 41, 44) étant monté sur une des portes coulissantes.

2. Dispositif d'ouverture suivant la revendication 1, caractérisé en ce que la ou les tiges (12, 31, 36, 43, 45) de piston du ou des cylindres (11, 30, 35, 41, 44) monté(s) sur une des portes coulissantes (2, 23, 32, 37, 38) est ou sont reliée(s) par son ou leur extrémité libre au bord inférieur (24a, 33a, 39a) de l'autre porte coulissante (1, 24, 33, 38, 39).

3. Dispositif d'ouverture suivant la revendication 1, où les portes (1, 2) ont la même ou à peu près la même hauteur, caractérisé en ce que les cylindres ont la même ou à peu près la même longueur.

4. Dispositif d'ouverture suivant les revendications 1 et 3, caractérisé en ce que des cylindres sont installés à l'extérieur de la cabine de la machine-outil, d'autres à l'intérieur de la cabine ou tous les cylindres à l'extérieur de la cabine.

5. Dispositif d'ouverture suivant la revendication 1 et une des revendications 2 et 4, caractérisé en ce que les deux cylindres supérieurs (11) sont fixés par leurs extrémités supérieures et inférieures respectivement au bord inférieur (2a) et au bord supérieur (2c) de la porte supérieure (2).

6. Dispositif d'ouverture suivant la revendication 1 et une des revendications 2 à 5, caractérisé en ce que chacun des cylindres peut être soumis à la pression d'un milieu à chacune de leurs extrémités.

7. Dispositif d'ouverture suivant la revendication 1 et une des revendications 2 à 6, caractérisé en ce que les cylindres stationnaires sont reliés au moyen de traverses ou de pattes (10, 14, 29) à la porte située à la même hauteur.

Fig.1

Fig.2

Fig.3

Fig.4

Fig.5

Fig. 6

Fig.7

Fig.9

Fig.8